# EUROPÄISCHE PATENTANMELDUNG

(11) **EP 2 574 423 A1**
(43) Veröffentlichungstag der Anmeldung: **03.04.2013**
(21) Anmeldenummer: 12183491.5
(22) Anmeldetag: 07.09.2012
(51) Int. Cl.: B23Q 11/10, B05B 7/16

(54) **Verfahren zur Kühlung von Aerosolen**

(30) Priorität: 29.09.2011 DE 102011083666
(71) Anmelder: Rother Technologie GmbH & Co. KG, 72574 Bad Urach (DE)
(72) Erfinder: Rother, Reiner, 72574 Bad Urach (DE)
(74) Vertreter: Kohler Schmid Möbus

(57) **Zusammenfassung**

Ein Verfahren zur Kühlung von Aerosolen, bei dem das Aerosol (1) zunächst durch ein flüssiges Kühlmedium (2) indirekt durch Hindurchleiten des Aerosols (1) und des Kühlmediums (2) in benachbarten Führungen (6, 10) gekühlt wird, bevor eine Vermischung des Aerosols (1) mit dem Kühlmedium (2) erfolgt.

## Beschreibung

Aerosole werden häufig zur Kühlung von Werkzeugen an Werkzeugmaschinen eingesetzt. Das Aerosol ist ein Gemisch aus einem Transportgas und fein darin verteilten Flüssigkeitströpfchen, wobei als Flüssigkeit in der Regel Öl eingesetzt wird. Es bildet auf dem Werkzeug eine so genannte Minimalmengenschmierung aus. Die Menge des Aerosols bestimmt, wie stark die Kühlung des Werkzeugs ist. Die Kühlung wird dabei durch die sich auf dem Werkzeug absetzende Flüssigkeit bestimmt. Bei schwierigen Zerspanungsaufgaben ist eine starke Kühlung des Werkzeugs erforderlich, was eine entsprechend große Menge an Aerosol erfordert.

Aerosole stellen jedoch eine Belastung für die Umwelt dar, sodass eine Erhöhung der Aerosolmenge ökologisch problematisch ist und höhere Entsorgungskosten bedeutet. Zur Verringerung dieser Probleme wird vereinzelt eine Kühlung der Aerosolzuführungen vorgenommen, sodass insgesamt weniger Aerosol am Werkzeug benötigt wird.

Der vorliegenden Erfindung liegt die Aufgabe zugrunde, ein effektives Kühlverfahren für Aerosole bereitzustellen, das umweltfreundlich und auch an bestehenden Werkzeugmaschinen einsetzbar ist.

Die Aufgabe wird gelöst mit einem Verfahren zur Kühlung von Aerosolen, das dadurch gekennzeichnet ist, dass das Aerosol zunächst durch ein flüssiges Kühlmedium indirekt durch Hindurchleiten des Aerosols und des Kühlmediums in benachbarten Führungen gekühlt wird, bevor eine Vermischung des Aerosols mit dem Kühlmedium erfolgt.

Durch diese zweistufige Kühlung des Aerosols kann das Aerosol auf Temperaturen bis -40° abgekühlt werden. Dabei kann das Kühlmedium in mindestens eine Kühlleitung eingespeist werden, die innerhalb einer Aerosolführung verläuft, und am Ende der Aerosolführung das Aerosol mit dem Kühlmedium vermischt werden. Bei dieser Ausgestaltung des Verfahrens lassen sich bestehende Werkzeugmaschinen nachrüsten, indem in die bestehende Aerosolführung mindestens eine Leitung für das Kühlmittel eingeführt wird.

Zur Erhöhung der Effektivität des Verfahrens kann das Kühlmedium in zwei Kühlleitungen eingespeist werden, die innerhalb eines Aerosolrohres oder -schlauches verlaufen. Durch die Verwendung zweier Kühlmittelleitungen vergrößert sich die Kontaktfläche zwischen Kühlmedium und Aerosol, wodurch die indirekte Kühlung des Aerosols deutlich verbessert wird. Die Verteilung des flüssigen Kühlmittels auf die beiden Leitungen kann beispielsweise mittels Magnetschaltventilen erfolgen.

Zur Vermischung des Aerosols mit dem Kühlmedium kann eine parallele Expansionsdüse eingesetzt werden. Diese kann am Ende der Aerosolführung angeordnet werden, sofern das Werkzeug von außen gekühlt wird.

Wird das Aerosol dagegen durch die Werkzeugspindel einer Werkzeugmaschine hindurchgeführt, können das Aerosol und das Kühlmedium in einem Werkzeugspanner der Werkzeugmaschine miteinander vermischt werden. Dadurch wird das Werkzeug direkt gekühlt.

Als Kühlmedium können verschiedene Flüssigkeiten eingesetzt werden. Als besonders effektiv haben sich dabei flüssiges CO2 und Stickstoff herausgestellt.

Im Folgenden werden zwei bevorzugte Ausgestaltungen eines erfindungsgemäßen Verfahrens anhand der Zeichnung näher erläutert.

Es zeigen:
- Fig. 1: eine schematische Darstellung einer Aerosolkühlung für externe Zuführung des Aerosols zu einem Verbraucher;
- Fig. 2: eine schematische Darstellung einer Aerosolkühlung bei interner Zuführung des Aerosols zu einem Werkzeug.

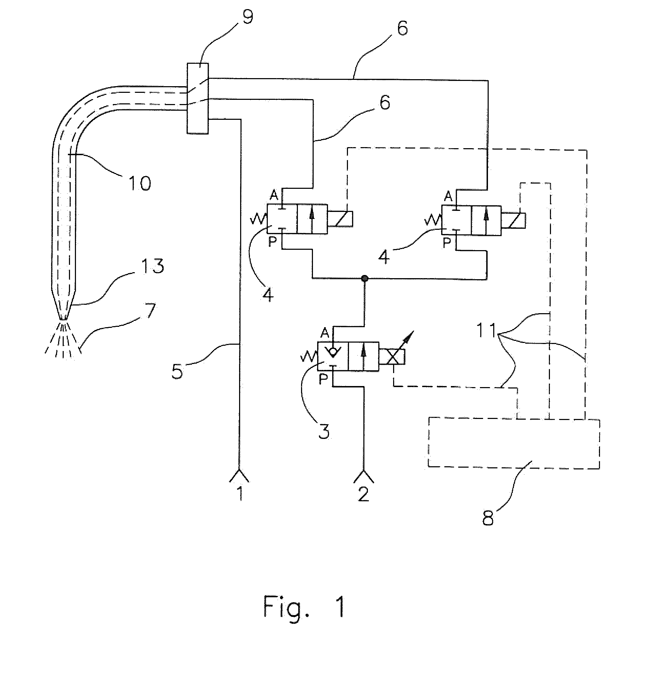

Beim in Fig. 1 dargestellten Verfahren wird Aerosol 1 über eine Aerosolleitung 5 und einen Adapter 9 einem Aerosolschlauch 10 zugeführt. Innerhalb des Aerosolschlauches sind zwei Kühlleitungen 6 geführt, die am Eingang des Schlauches 10 vom Adapter 9 gehalten sind. In die Kühlleitungen 6 wird außerhalb des Schlauches 10 ein flüssiges Kühlmittel 2 zugeführt. Das Kühlmittel 2 wird dabei zunächst von einem Proportionalventil in der gewünschten Dosierung auf zwei Magnetschaltventile 4 geleitet, die das Kühlmittel abwechselnd in eine der beiden Kühlleitungen 6 einspeisen.

Sowohl das Proportionalventil als auch die Magnetschaltventile werden von einer elektrischen Steuerung über elektrische Leitungen 11 angesteuert.

Das durch die Leitungen 6 in den Schlauch 10 eingeführte Kühlmittel kühlt das die Kühlleitungen 6 im Schlauch 10 umströmende Aerosol indirekt vor, bevor am Ausgang des Schlauches 10 ein Proportionalventil das Aerosol mit dem Kühlmittel vermischt. Es entsteht dadurch gekühltes Aerosol 7, das beispielsweise zur Kühlung eines Werkzeugs (nicht dargestellt) eingesetzt werden kann.

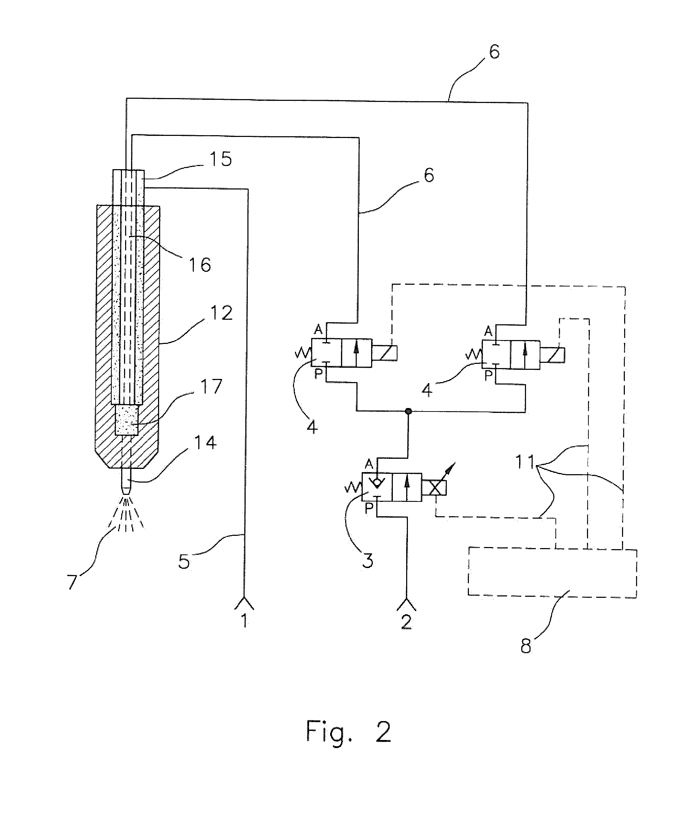

Beim in Fig. 2 gezeigten Verfahren wird ein Kühlmittel 2 in analoger Weise wie beim Verfahren in Fig. 1 über ein Proportionalventil 3 zunächst dosiert und dann über zwei Magnetschaltventile 4 abwechselnd in zwei Kühlleitungen 6 eingespeist. Die Kühlleitungen 6 werden bei diesem Verfahren durch eine Drehdurchführung 15 einer Spindel 12 einer Werkzeugmaschine (nicht dargestellt) durch ein stationäres Deflektorrohr 16 hindurch zu einem Werkzeugspanner 17 geleitet. Gleichzeitig wird Aerosol 1 über eine Leitung 5 zur Drehdurchführung 13 und in die Spindel 12 geleitet, wo es das Deflektorrohr 16 von außen umströmt und dadurch zunächst durch das Kühlmedium indirekt vorgekühlt wird, bevor es im Werkzeugspanner 17 am Ende des Deflektorrohres 16 zu einer Vermischung von Aerosol 1 und Kühlmittel 2 und damit zu einer direkten Kühlung des Aerosols kommt. An der Spitze des im Werkzeugspanner 17 gespannten Werkzeugs 14 kann dadurch das gekühlte Aerosol 7 austreten.

## Patentansprüche

1. Verfahren zur Kühlung von Aerosolen, **dadurch gekennzeichnet, dass** das Aerosol (1) zunächst durch ein flüssiges Kühlmedium (2) indirekt durch Hindurchleiten des Aerosols (1) und des Kühlmediums (2) in unmittelbar benachbarten Führungen (6, 10, 12) gekühlt wird, bevor eine Vermischung des Aerosols (1) mit dem Kühlmedium (2) erfolgt.

2. Verfahren nach Anspruch 1, **dadurch gekennzeichnet, dass** das Kühlmedium (2) in mindestens eine Kühlleitung (6) eingespeist wird, die innerhalb einer Aerosolführung (10) verläuft, und am Ende der Aerosolführung (10) das Aerosol (1) mit dem Kühlmedium (2) vermischt wird.

3. Verfahren nach Anspruch 2, **dadurch gekennzeichnet, dass** das Kühlmedium (2) in zwei Kühlleitungen (6) eingespeist wird, die innerhalb eines Aerosolrohres (16) oder -schlauches (13) verlaufen.

4. Verfahren nach einem der Ansprüche 1 bis 3, **dadurch gekennzeichnet, dass** das Aerosol (1) und das Kühlmedium (2) mittels einer Expansionsdüse (13) vermischt werden.

5. Verfahren nach einem der Ansprüche 1 bis 3, **dadurch gekennzeichnet, dass** das Aerosol (1) und das Kühlmedium (2) in einem Werkzeugspanner (17) einer Werkzeugmaschine miteinander vermischt werden.

6. Verfahren nach einem der Ansprüche 1 bis 5, **dadurch gekennzeichnet, dass** als Kühlmedium (2) flüssiges CO2 oder flüssiger Stickstoff eingesetzt werden.
